# EUROPEAN PATENT APPLICATION

(11) **EP 2 216 786 A1**
(43) Date of publication of application: **11.08.2010**
(21) Application number: 10164381.5
(22) Date of filing: 22.09.2006
(51) Int. Cl.: G11B 23/40, G11B 7/26

(54) **Dual layer optical disc and manufacturing method therefor**

(30) Priority: 05.05.2006 IN DE11342006
(62) Divisional of application: 06121150.4
(71) Applicant: Moser Baer India Ltd., Greater Noida 201306 Uttar Pradesh (IN)
(72) Inventor: Raman, Rajagopal S., 201306 Uttar Pradesh (IN); Jindal, Rajeev, 201307 Noida Uttar Pradesh (IN)
(74) Representative: Best, Rachel Elizabeth

(57) **Abstract**

The invention provides for a method of manufacturing a dual layer optical disc comprising an active layer and a dummy layer. The method comprises the steps of producing an active layer with an information recorded on the active layer; producing a dummy layer with a data appearing on one surface of the dummy layer; bonding the active layer with the dummy layer on a surface other than the one surface of the dummy layer provided with the data; the data appearing on the one surface of the dummy layer being provided by embossing.

## Description

The present application is a divisional application relating to the earlier European Patent Application No. 06121150.4, which is also published as EP 1 852 867 A2. The earlier European Patent Application No. 06121150.4 is directed to manufacturing of a stamper used in the production of an optical disc. The divisional application is primarily directed to a method of manufacturing the optical disc with data embossed on its dummy layer, and the optical disc thus produced. The description of various embodiments corresponding to the earlier European Patent Application No. 06121150.4 is retained to assist in the understanding of the claims and invention of the present application.

### DESCRIPTION

The invention relates to a method of manufacturing discs containing information. More particularly the invention relates to a method of forming visible image information or artwork on optical discs.

Optical media is a very important data storage technology with numerous formats, such as CD, DVD that besides sound also carry data, graphics and full motion video parts. A DVD (Digital Video Disc) is a dual layer disc comprising of two .6mm polycarbonate discs bonded together. The two discs together form a 1.2 mm disc that may be one side read or both side read. Optical discs are typically mass-produced using molds referred to as 'stampers'.

Dual layer discs have one layer that is used for recording and is referred to as the active layer and the second a dummy layer added for mechanical strength, stability and to prevent corrosion. The layer on which information is recorded is referred to as the active layer and the layer added for mechanical strength is referred to as the dummy layer. Some dual layer discs also have a recording layer on both half discs that are then bonded together with the recording layers adjacent to each other. Data from one or both recording layers is read from one side in case of single side read discs, and the other surface is used for printing generic and specific information.

The recording side or active side of a disc comprises of a number of layers namely the first polycarbonate plastic substrate with a shallow spiral groove, followed by a dye followed by a metal reflective layer. An adhesive then bonds two active layers or an active and a dummy layer together into the final disc. The upper surface of the finished disc is then printed on with the manufacturers name, logo or other generic and specific data.

Disc production is a complicated process and comprises of numerous steps. Firstly, the digital information is recorded onto a glass master disc by forming the surface of the master disc with pits/grooves. These pits/grooves are formed by selectively exposing a surface coating on the master disc with a laser beam.

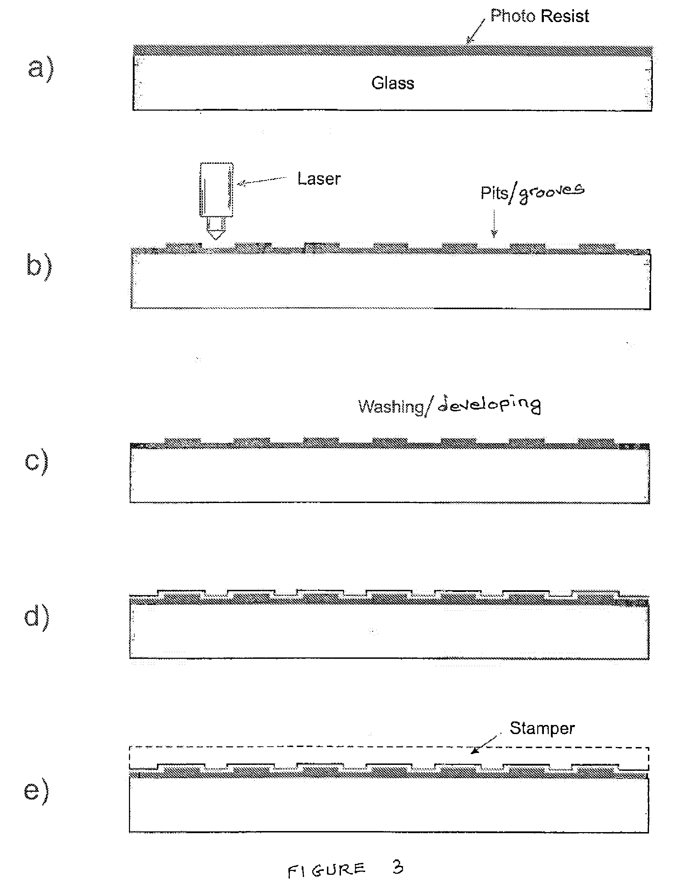

The process of manufacture of a stamper may be better understood with reference to figure 3 where at step 'a', a layer of photoresist is spin coated onto the glass master, which on drying is ready for exposing by laser light. The data to be recorded is read from the source and recorded to the photoresist on the glass master using a laser as indicated at step 'b'. The photoresist dissolves where the laser hits, creating pits. After recording, the glass master is washed and developed by spinning a solution over the glass master to remove the photoresist exposed by the laser, creating pits/grooves in the surface, as indicated by step 'c'. A small amount of nickel, nickel vanadium, any nickel alloy or other suitable material, though preferably nickel vanadium, is deposited onto the surface of the photoresist, as illustrated by step 'd'. The layer of nickel vanadium is approximately 70 nm thick This is followed by a process known as "electroforming", wherein the glass master has a layer of nickel grown onto its coated surface, indicated by step 'e'. The layer of nickel grown is approximately 300 microns thick. This sheet of nickel, referred to as the "father" is subsequently removed from the glass master. The father is a reverse image of the data and could be used to stamp discs, with the top surface of the stamper formed of the nickel vanadium coating. The stampers are used to mould the pit structure onto the discs polycarbonate layer, followed by a dye layer in case of active layer or recording side of disc, which is then metalised or coated with aluminum and a final protective layer or lacquer is applied.

Such a stamped disc, pre-recorded or recordable is bonded with a dummy disc of substantially the same thickness to form the final disc that is then sent for printing.

Identification information in the form of labels, designs, logos, graphics or artwork is required to be marked on the discs. Information to be printed includes the disc manufacturer, the storage capacity and the disc format along with some design or artwork. Such information is generally applied by a silkscreen process or an offset printer on the dummy layer. This process is manpower intensive and also requires additional printing materials, expensive machines, and a large space to perform this job. Optical discs are placed on the machine and are printed one-by-one. Thus the process is also time consuming, cumbersome and often proves to be the bottleneck in meeting the output requirement within the stipulated time, in view of machine capacity and inter process synchronization. Furthermore, a number of discs are rejected due to low-grade printing and over handling. The process results in the addition of an extra step of manufacturing and increases the overall cost of the discs.

Another disadvantage of printing on discs is that the printed matter can be erased by the application of solvents.

Holography is another method of applying artwork to discs in which the interference pattern between two laser beams is recorded under extremely stable conditions and a protected environment. The holography process is however time consuming requiring long hours of exposure. The process is also expensive and increases the cost of manufacturing discs.

Another method of applying graphics or visible identification information to discs is by depressing the top surface of the disc by thermal branding, laser scribing or selective chemical etching. Thermal branding involves pressing a heated metal pattern against each disc.

Other techniques have been developed such as pit art, as described in US 5729533 , 5398231 , which are incorporated herein by reference. The pit art technique is similar to the process of recording information on the disc and involves the production of stampers, in the known manner including scribing the image on the photoresist by a laser. The graphical image is molded on the disc during manufacture and no separate printing step is required. The modified surface is then sputtered with a highly reflective material such as aluminum/silver that is optionally protected by a protective layer.

In the process of using pit art for forming images or graphics each dummy layer is to subsequently go through the additional steps of coating with a highly reflective material. This makes the process expensive and time consuming. The process also requires the use of a Blue laser for scribing the graphics.

Furthermore, in the pit art technique printing of images along a chord of the circular disc is complicated and often lacks in quality as the laser used for etching travels along a spiral path from the center of the disc outwards

The depth of the image etched by a laser on the photoresist is typically under 800 nm. In order for such nano-size pits to be visible to the naked eye a reflective layer and thus also a protective layer has to be added to each dummy layer. In order to eliminate the use of a reflective layer and the lacquer for the dummy layer, the image etched by the laser must be of a sufficient depth such that light reflects easily from the pits and the image is visible to the naked eye. This however is expensive and time consuming involving extensive use of a laser and a sputtering/metal layer every disc.

Thus in the prior art in order to print images or graphics on a disc, printing could be done directly on each finished disc. Alternatively, pit art or holography could be used to mold the image on to the disc followed by a step of adding a reflective and protective layer on each disc before bonding with the disc with recorded information.

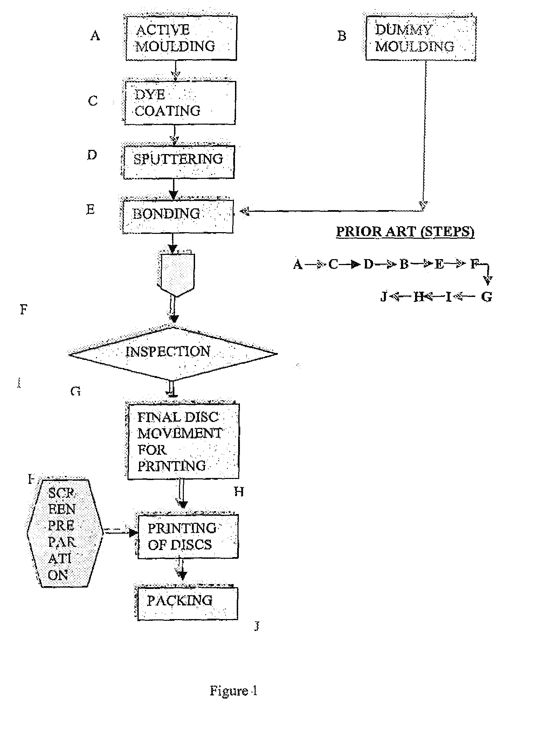

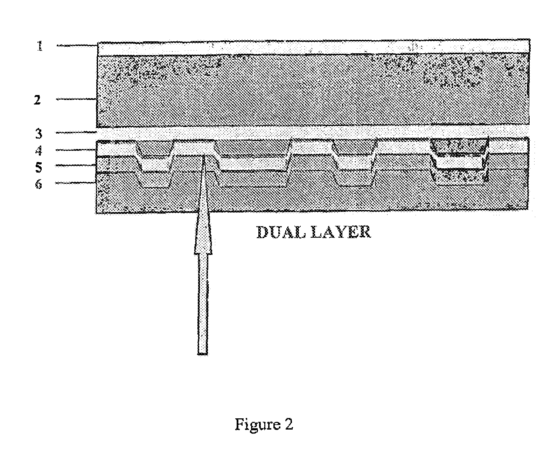

Figure 1 illustrates the steps involved in manufacturing a disc in the prior art. As shown, step A involves the active layer molding on the substrate by the stamper followed by dye, step C, followed by sputtering of reflective layer, step D. Simultaneously, the dummy disc is molded at step B, which with an adhesive layer and is bonded with the active disc at step E. The two part disc thus formed is sent for inspection at step F and finally for printing at step G. Each disc is then printed on at step H, I and finally sent for further inspection and packing at step J. A disc formed from this process is illustrated in Figure 2. The dummy layer (2) is shown to have printed material (1). The dummy layer is bonded to the active layer (6) by bonding layer (3). The active layer also comprises of the dye layer (5) and the reflective layer (4).

There is therefore a requirement for a method of printing images on discs economically and quickly. To overcome the aforementioned drawbacks the invention provides for an improved method of transferring graphical and identification information to a disc in an economical and quick manner.

According to the present invention there is provided an apparatus and method as set forth in the appended claims. Preferred features of the invention will be apparent from the dependent claims, and the description which follows.

According to an aspect of the present invention there is provided a method of manufacturing a dual layer optical disc comprising of an active layer and a dummy layer comprising the steps of: producing an active layer with data recorded on it by a stamper; producing a dummy layer with data embossed on one surface by a stamper; bonding the active layer with the embossed dummy layer on the surface other than the embossed surface of the dummy layer.

According to an aspect of the present invention there is provided a dual layer optical disc comprising an active layer and a dummy layer bonded together, said dummy layer having one surface with embossed data wherein the embossed surface forms the top surface of the disc.

Preferably, the embossed surface has pits that are at least 2 microns deep.

The invention provides for a method of manufacturing a stamper for embossing data on an optical disc comprising the steps of printing data to be embossed directly on a glass master to form a printing layer; sputtering of metal or alloy on said printing layer; forming a layer of metal or alloy on the sputtered layer, separating the metal or alloy layers from the glass to form a stamper.

Preferably, the glass is treated to make it hydrophilic before printing is carried out.

Preferably, screen printing is done on the glass master.

Preferably, the printing layer is cured under a ultra-violet lamp to firm up the print.

Preferably, the printing layer is washed to remove the burrs & to smoothen the edges of the print.

Preferably, the printed layer has pits formed corresponding to the data to be transferred.

Preferably, the depth of the pits formed on the printing layer is at least 2 microns.

All of the features described herein may be combined with any of the above aspects, in any combination.

The accompanying drawings illustrate the preferred embodiments of the invention and together with the following detailed description serve to explain the principles of the invention.
Figure 1 illustrates a method of manufacturing a disc in the prior art.
Figure 2 illustrates a disc manufactured in accordance with the method of the prior art.
Figure 3 illustrates the method of manufacture of a stamper in the prior art.
Figure 4 illustrates the method of manufacturing a stamper in accordance with an embodiment of the invention.
Figure 5 illustrates the method of manufacturing a disc in accordance with an embodiment of the invention.

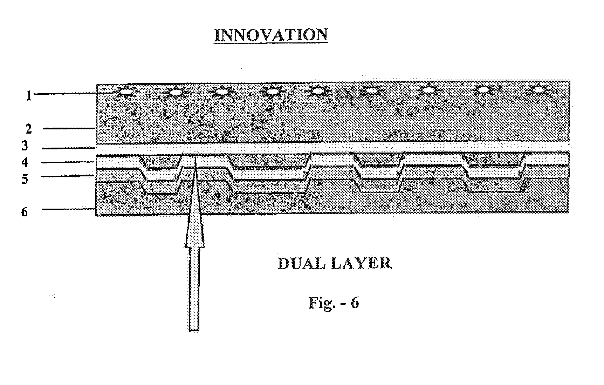

Figure 6 illustrates a disc formed in accordance with an embodiment of the invention.

### DETAILED DESCRIPTION OF THE INVENTION

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

The invention in accordance with one embodiment provides for a method of printing on discs without using a photoresist layer, laser, thermal branding or applying a reflective layer to each dummy layer.

The method in accordance with the invention provides for molding the image directly on the dummy layer during manufacture of the dummy layer. The dummy layer so produced is bonded directly to the active layer without requiring a reflective or protective layer. The side of the dummy layer with the embossed printing is not the side used for bonding and thus the other flat surface of the dummy layer is used for bonding not requiring any protective coating. The embossed image on the top surface can be felt and is easily visible on account of the distance between the edges of the embossed image that reflect light more prominently.

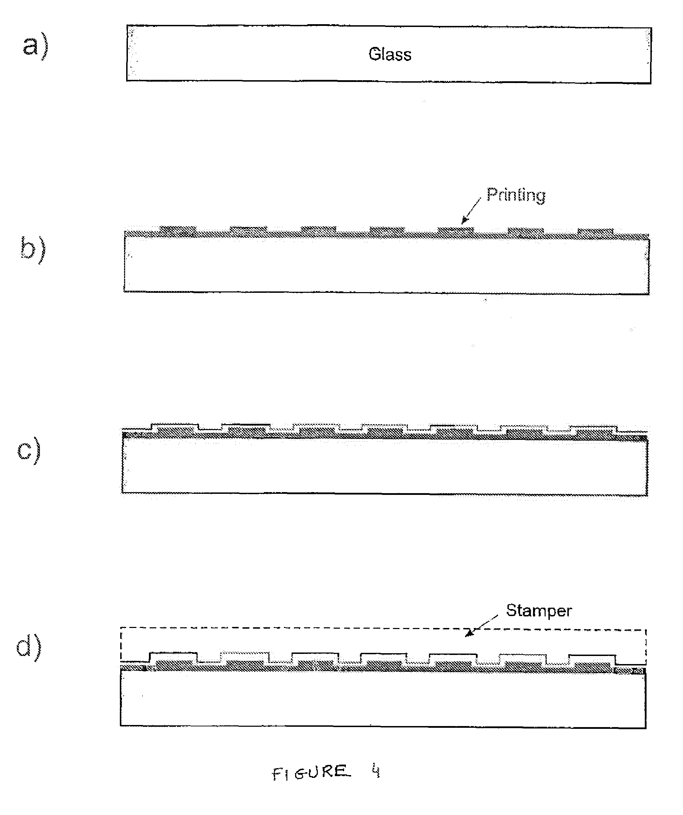

Figure 4 illustrates the method of manufacturing a stamper for a disc in accordance with an embodiment of the invention. To mold the image directly on the disc during manufacture the corresponding stamper is to be manufactured. The glass master is prepared by first directly printing on the glass as shown in step A. The glass master with the image printed on it directly is then directly sent to the sputtering stage and a layer of nickel is grown on it. The remaining stages of stamper formation are conventionai. Conventional printing such as screen or offset printing may be carried out on the glass master.

To print directly on the glass master, special jigs are formed to hold the glass. The surface of the glass master is preferably treated to make it hydrophilic before printing, as indicated by step A of figure 4. In order to make the glass hydrophilic it is treated with alcohol, acetone or any other known substance for this purpose. The surface of glass is made hydrophilic to retain the printing carried out on it. Printing of the graphical information or artwork is now carried out directly on the surface of the treated glass master, as indicated by step B. After printing the printed surface is cured by a UV lamp for a short period to firm up the print on the glass so that subsequent stages of conventional stamper development may be carried out as indicated by steps C and D.

Optionally, after curing the printing on the glass, the glass master is spun with water washing on the printed surface to smoothen the edges and improve the graphical image quality.

The stamper formed in accordance with the invention forms pits on the dummy layer that are at least 3 microns deep and may be within the range of 3-20 microns. The greater depth of the pits does not require a reflective or protective layer to be added. Moreover, the side of the dummy disc with the embossed image is not used for bonding to the active layer. The side with the image embossed forms the top surface of the disc.

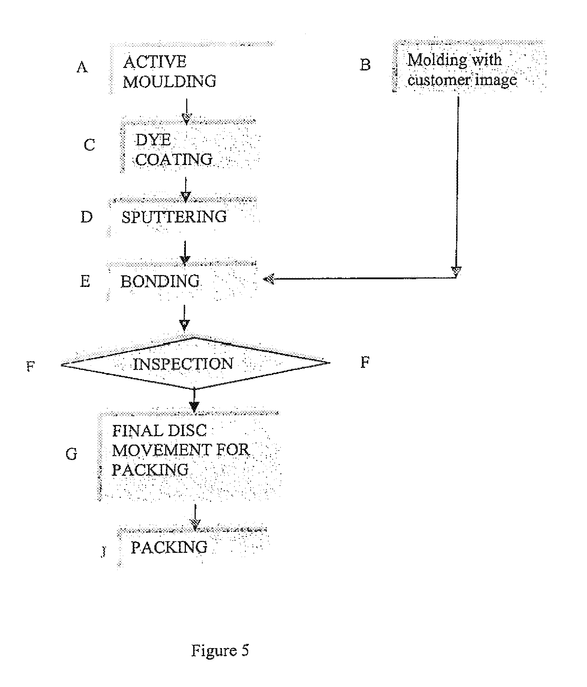

Figure 5 illustrates the process of manufacturing the disc in accordance with an embodiment of the invention. Steps A, C, D, and E for manufacturing the active layer remains the same as in figure 1. Step B of manufacturing the dummy layer now produces the dummy layer with the image molded on one surface. The other side of the dummy layer is then bonded to the active layer. The final disc is directly sent for packing without the added step of printing.

The disc manufactured in accordance with the invention reduces final time for dispatch from the manufacturing facility. The method also eliminates the use of a laser for forming the stamper for the dummy layer and consequently also eliminates the requirement of sputtering on each dummy layer. The inventive method endeavors at reducing costs by the elimination of an entire stage of the manufacturing process thereby also eliminating the associated inventory, machine, space, manpower and raw material requirements.

The method of forming images on discs in accordance with the invention allows for complicated images to be printed and eliminates the risk of disc damage during the printing stage. Furthermore counterfeiters cannot easily copy the disc so manufactured, as removal of embossed data from the dummy layer would tend to damage the disc.

While the invention has been illustrated and described in detail in the drawings and foregoing description, the same is to be considered as illustrative and not restrictive in character, it being understood that only the preferred embodiment has been shown and described and that all changes and modifications that come within the scope of the invention are desired to be protected.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of manufacturing a dual layer optical disc comprising an active layer and a dummy layer, the method comprising the steps of:
- producing an active layer with an information recorded on the active layer;
- producing a dummy layer with a data appearing on one surface of the dummy layer;
- bonding the active layer with the dummy layer on a surface other than the one surface of the dummy layer provided with the data;
**characterised in that** the data appearing on the one surface of the dummy layer is provided by embossing.

2. A method of manufacturing a dual layer optical disc as claimed in claim 1, wherein the data is embossed on the one surface of the dummy layer by using a stamper.

3. A method of manufacturing a dual layer optical disc as claimed in claim 2, wherein the stamper is obtained by taking a negative impression of a print corresponding to the embossed data on a layer of a metal or an alloy, and wherein the print being made on a hydrophilic glass master.

4. A dual layer optical disc comprising an active layer and a dummy layer bonded together, the dummy layer having one surface with a data, wherein the one surface with the data forms the top surface of the disc; **characterized in that** the data is embossed on the one surface of the dummy layer.

5. A method of manufacturing a dual layer optical disc as claimed in claim 4, wherein the data is embossed on the one surface of the dummy layer by using a stamper.

6. A dual layer optical disc as claimed in claim 5, wherein the stamper is obtained without using a laser scribing process.

7. A dual layer optical disc as claimed in claim 5, wherein the stamper being obtained by taking a negative impression of a print corresponding to the embossed data on a layer of a metal or an alloy, and wherein the print being made on a hydrophilic glass master.

8. A dual layer optical disc as claimed in claim 4, wherein the one surface with embossed data has pits that are at least 2 microns deep.

9. A dual layer optical disc as claimed in claim 4, wherein the dummy layer does not comprise a reflective layer.

10. A dual layer optical disc as claimed in claim 4, wherein the embossed data is one of an image, an artwork and a graphical information.
